Europäisches Patentamt

(19) European Patent Office

Office européen des brevets

(11) Numéro de publication: **0 039 103**

**B1**

(12) **FASCICULE DE BREVET EUROPEEN**

(45) Date de publication du fascicule du brevet: 06.02.85

(51) Int. Cl.⁴: **G 01 T 1/164**

(21) Numéro de dépôt: **81200402.6**

(22) Date de dépôt: **08.04.81**

(54) Caméra à scintillations avec localisateur munie d'un intensificateur de scintillations.

(30) Priorité: **29.04.80 FR 8009669**

(43) Date de publication de la demande:
**04.11.81 Bulletin 81/44**

(45) Mention de la délivrance du brevet:
**06.02.85 Bulletin 85/06**

(84) Etats contractants désignés:
**DE FR GB NL**

(56) Documents cités:
**GB-A-2 016 206**

**NUCLEAR INSTRUMENTS AND METHODS,
vol. 136, no. 2, juillet 1976, AMSTERDAM (NL)
B. SHAFRIR et al.: "A proposal for a combined
scintillation-image-intensifier section for
application in gamma-camera", pages 399-450**

**SIEMENS FORSCHUNGS- und
ENTWICKLUNGSBERICHTE, vol. 4, no. 3, 1975,
BERLIN (DE) P. KEIL: "Räumliches
Auflösungsvermögen der Gammakamera
SCINTICON", pages 152-158**

(73) Titulaire: **Laboratoires d'Electronique et de
Physique Appliquée L.E.P.
3, Avenue Descartes
F-94450 Limeil-Brévannes (FR)**
(84) **FR**

(73) Titulaire: **N.V. Philips' Gloeilampenfabrieken
Groenewoudseweg 1
NL-5621 BA Eindhoven (NL)**
(84) **DE GB NL**

(72) Inventeur: **Jatteau, Michel
Société Civile S.P.I.D. 209 rue de l'Université
F-75007 Paris (FR)**
Inventeur: **Lelong, Pierre
Société Civile S.P.I.D. 209 rue de l'Université
F-75007 Paris (FR)**
Inventeur: **Pergrale, Jean
Société Civile S.P.I.D. 209 rue de l'Université
F-75007 Paris (FR)**

(74) Mandataire: **Landousy, Christian et al
Société Civile S.P.I.D. 209, Rue de l'Université
F-75007 Paris (FR)**

## Description

La présente invention concerne une caméra à scintillations avec localisateur munie d'un intensificateur de scintillations.

L'utilité de la présence d'une intensification de scintillations dans les caméras pour détection de rayonnements X ou γ réside dans le fait qu'elle permet d'améliorer leurs performances notamment celle de résolution géométrique.

Des caméras avec localisateur de scintillations réalisé à l'aide d'un réseau de photodétecteurs, et munies d'un intensificateur d'image sont décrites par exemple dans l'article de A. Lansiart et al dans la revue Proceedings of Symposium on Medical Radiosiotope Scintigraphy, IAEA Vienne, 1969, Vol 1. pages 87 à 98. Dans ces caméras, le cristal scintillateur est directement couplé sur la face d'entrée d'une amplificateur de lumière réducteur d'image. La tache produite à chaque scintillation sur l'écran du tube amplificateur est vue par un ensemble de quatre photomultiplicateurs qui permettent de retrouver le barycentre de la scintillation et ses coordonnées par rapport à une système d'axes du plan du scintillateur. Ces caméras présentent un certain nombre d'inconvénients. L'un de ceux-ci a trait à la réalisation du couplage optique entre tube intensificateur et scintillateur extérieur. La fenêtre d'entrée du tube intensificateur, compte tenu de son diamètre, est généralement convexe et épaisse si bien que le cristal scintillateur plaqué contre cette fenêtre doit présenter lui-même une face convexe et que les points de scintillations sont éloignées de la photocathode. Par ailleurs, la photocathode de même que l'écran du tube intensificateur doivent présenter une grande uniformité de propriétés photoélectriques sur leur surface de manière que l'intensification de lumière soit elle-même uniforme en surface et ne vienne pas fausser les indications du localisateur tant en ce qui concerne la position du barycentre que la valeur de l'énergie mesurée. Or, cette uniformité est difficile à réaliser pour de grandes surfaces égales à celles du cristal scintillateur. Une autre raison qui vient fausser ces indications concerne la réductions d'image sur l'écran de la répartition des photoélectrons correspondant à chaque scintillation. Cette réduction entraîne en effet des distorsions géométriques de cette image et nécessite ègalement une très grande précision de localisation des scintillations. Le localisateur associé doit donc être capable de fournir cette précision et d'effecter des corrections des défauts de linéarité. Il doit donc comporter en première analyse un nombre élevé de photodètecteurs ce qui n'est pas possible du fait de ladite réduction de champ de cette localisation. Le brevet anglais GB—A—2 016 206 décrit un caméra à scintillations dans laquelle le scintillateur est en forme de lame à faces parallèles et est associé à un intensificateur d'image possédant un fenêtre d'entrée métallique courbe (ou plane mais incluant un collimateur;, et fonctionnant sans réduction d'image. Ce tube présente une bonne partie des inconvénients précédemment cités relatifs à l'uniformité de photocathode et d'écran de grandes dimensions et d'autres inconvénients liés à la forme de la fenêtre d'entrée tels que perte de résolution spatiale dans le cas de la fenêtre courbe et non interchangeabilité du collimateur en fonction des performances souhaitées. Par ailleurs, les dimensions d'un tel tube sont nécessairement limitées pour des raisons technologiques, ce qui entraîne un limitation des dimensions du champ utile des caméras. La solution à ce problème de limitation de champ, indiquée dans ce brevet, qui consiste à juxtaposer plusieurs caméras de même principe que décrit ci-dessus présente l'inconvénient majeur d'avoir des zones aveugles importantes dans le champ utile; par ailleurs, cette solution est de réalisation complexe et onéreuse.

L'invention concerne une caméra à scintillations pour détection de photons X ou gamma qui comporte les mêmes principaux éléments constitutifs que les caméras précédemment citées, à savoir dans l'ordre dans le sens de propagation du rayonnement créant les scintillations, un cristal scintillateur unique, de préférence un fenêtre de protection dudit cristal transparente au rayonnement de scintillation, un intensificateur de lumière, un guide optique disperseur de lumière, un localisateur de scintillations formé d'un réseau de photodétecteurs dont les faces d'entrée sont en regard du guide optique et des circuits reliés auxdits photodétecteurs de façon à produire des signaux électriques de coordonnées représentant les coordonnées spatiales des points d'interaction entre les rayons X ou gamma et ledit cristal scintillateur ainsi qu'un dispositif d'affichage servant à représenter lesdits signaux électriques sous la forme de points lumineux répartis dans un plan, le cristal scintillateur, la fenêtre de protection, l'intensificateur de lumière, et le guide optique ayant chacun la forme d'une lame à faces parallèles et étant plaqués dans ledit ordre l'un contre l'autre, caractérisée en ce que ledit intensificateur de lumière est constitué d'une mosaïque de modules identiques de grandissement voisin de 1, indépendants, juxtaposés et jointifs, s'étendant entre les faces parallèles dudit intensificateur et comportant chacun du côté scintillateur un photocathode et du côté guide optique, un écran.

La conception desdits éléments constitutifs de la caméra ainsi proposée est telle qu'elle tend à remédier aux inconvénients et difficultés précédemment cités. Dans le case de l'objet de l'invention, en présence de l'intensificateur, le cristal scintillateur conserve une forme de lame à faces parallèles et planes dont le diamètre n'est pas limité par le système de détection. L'intensificateur est conçu de telle sorte que l'intensification soit quasi uniforme sur toute la surface du cristal scintillateur et ne comporte pas ou peu de réduction d'image sur son écran. De ce fait, l'image photoélectrique de chaque scintillation apparaît avec de moindres distorsions géométriques et la localisateur peut comporter un grand nombre de photodétecteurs, comme dans la caméra Anger.

De plus, l'intensificateur peut prendre toutes dimensions en surface en rapport avec celles choisies pour le scintillateur. Dans cet intensificateur de scintillations, constitué d'une mosaïque de modules identiques indépendants, chacun présentant une face d'entrée et une face de sortie parallèles, ces modules sont juxtaposés et forment une lame à faces parallèles dont la face d'entrée munie des photocathodes est couplée optiquement à la face de sortie du cristal scintillateur par l'intermédiaire de sa fenêtre transparente de protection et dont la face de sortie munie des écrans est couplée optiquement au localisateur d'évènements. Ces modules sont constitués chacune d'un tube choisi parmi ceux qui présentent d'une part une sensibilité spectrale de photocathode en bonne correspondance avec le spectre d'émission du scintillateur et d'autre par un écran de grande rapidité et ayant une émission spectrale en bonne correspondance avec la sensibilité des photodétecteurs. Les surfaces de détection de ces tubes diodes ont des formes géométriques diverses mais, de préférence à une forme circulaire, elles sont choisies polygonales, hexagonales ou carrées par exemple, de manière à ce qu'ils puissent être jointifs et former une surface de détection quasi continue.

Selon une première variante, chaques module intensificateur est un tube diode à focalisation de proximité comportant une photocathode et un écran anode, le localisateur, compte tenu du gain relativement faible de l'intensificateur, étant réalisé de préférence à partie de photomultiplicateurs à dynodes.

Selon une seconde variante, chaque module est constitué de deux tubes à inversion d'image de grandissement-1 placés l'un au-dessus de l'autre, l'écran du premier ayant une courbe de sensibilité spectrale relative semblable à celle de la photocathode du second. Selon cette variante, le gain d'intensification étant plus élevé que selon la première variante, le localisateur peut être réalisé à l'aide de photodétecteurs à semi-conducteur de gain plus faible que les photomultiplicateurs à dynodes.

Selon une troisième variante, les modules intensificateurs sont du type à galette de microcanaux à émission secondaire électronique et focalisation de proximité. Comme selon la seconde variante le gain d'intensification est assez grand pour que le localisateur soit réalisé avec des photodétecteurs à semi-conducteur plutôt qu'avec des photomultiplicateurs à dynodes.

L'invention sera mieux comprise à l'aide de la description suivante de ces variantes, ladite description étant accompagnée de dessins qui représentent:

Figure 1: une vue de la caméra selon l'invention du côté localisateur.

Figure 2: une coupe selon l'axe AB par un plan perpendiculaire à la figure 1 d'une première variante de l'invention.

Figure 3: une coupe par le même plan d'une seconde variante de l'invention.

Figure 4: une coupe par le même plan d'une troisième variante de l'invention.

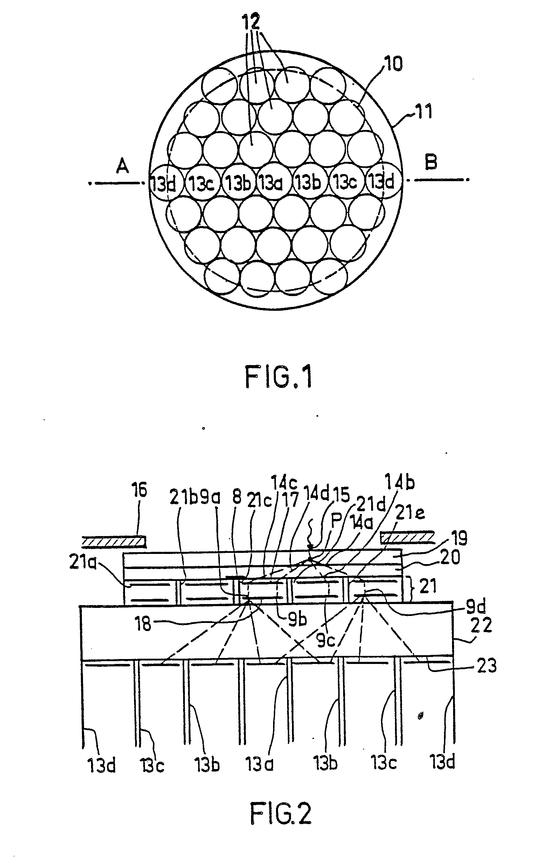

La figure 1 représente une caméra selon l'invention, vue de face du côté localisateur. Sur cette figure, relative à titre d'exemple à une caméra de forme circulaire, le cercle en pointillés 10 et le cercle 11 représentent les contours respectivement du scintillateur et du guide de lumière vus du côté localisateur. Les photodétecteurs constituant ce dernier forment un réseau 12 et sont placés face au cristal sur le guide de lumière. Les photodétecteurs sont disposés, par exemple, selon une configuration hexagonale autour d'un photodétecteur central. Chaque cercle en trait plein représente la face d'entrée d'un de ces photodétecteurs. Celui désigné par 13a correspond au photodétecteur central; 13b, 13c, 13d, désignent les photo détecteurs alignés suivant le diamètre AB avec 13a et appartenant chacun à l'un des hexagones. Pour simplifier, deux photodétecteurs symétriques par rapport à 13a et disposés sur le diamètre AB portent le même numéro.

La figure 2 représente la coupe transversale de l'entrée suivant le diamètre AB de la figure 1 d'une première variante de la caméra. Le scintillateur porte le numéro 19, une fenêtre de protection du scintillateur en verre pyrex, par exemple, le numéro 20 et le guide optique le numéro 22. Le guide optique est placé au-dessous du cristal scintillateur mais, entre le cristal muni de sa fenêtre de protection et le guide se trouve placé un intensificateur de lumière 21 à faces parallèles recouvrant toute la surface du scintillateur 19 et constitué d'éléments juxtaposés dont certains, vus en coupe le long du diamètre AB, sont respectivement $21_a$, $21_b$, $21_c$, $21_d$, $21_e$. Selon cette variante, chacun de ces modules est du type photodiode à focalisation de proximité et est constitué d'une photocathode faisant face au cristal scintillateur et d'un écran. Pour l'élément $21_c$ par exemple, ces photocathode et écran sont respectivement 17 et 18. De façon préférentielle, les surfaces de photocathode et d'écran de ces modules sont polygonales réguilières, par exemple, hexagonales out carrées, de manière à ce que ces modules soient jointifs. Le champ utile de la caméra est limité par le diaphragme 16 disposé face au cristal scintillateur 19. Sur cette figure, on retrouve, disposé sur la face 23 du guide de lumière 22, l'ensemble des photodétecteurs 13a, 13b, 13c, 13d constituant le localisateur de scintillations. Selon cette variante, du fait de la faiblesse relative du gain des photodiodes constituant l'intensificateur de lumière, ces photodétecteurs sont des photomultiplicateurs à dynodes de gain élevé. Les modules intensificateurs présentent dans cette variante comme d'ailleurs dans toutes les autres, une sensibilité spectrale en correpondance avec le spectre d'émission du scintillateur. D'autre part, le spectre de sensibilité des photodétecteurs est en correspondance avec le spectre de la lumière émise en sortie de l'intensificateur. Selon un exemple précis, le scintillateur est un cristal en iodure de sodium (I N$_a$) dopé au Thallium émettant dans le bleu (longueur d'onde centrée sur 410 nm (4 100 Å)); la photocathode de l'intensificateur est du type bialcaline; son écran est un luminophore de type P16 émettant dans le bleu. Les cathodes des photomultiplicateurs du localisateur étant du type bialcaline. Le fléche ondulée 15 représente l'arrivée dans le scintillateur d'un photon γ ce qui provoque au point P une scintillation qui rayonne par exemple suivant des rayons tels que les rayons 14a, 14b, 14c, 14d. Les photons transportés par ces rayons sont intensifiés dans les modules intensificateurs 21a à 21e d'où résulte en sortie de ces modules pour la scintillation correspondante n points brillants tels que 9a, 9b, 9c, 9d qui rayonnent à leur tour vers les photodétecteurs 13a à 13d du localisateur, lequel détermine des coordinées du point de scintillation P à partir de celles desdits n points brillants, la résolution spatiale étant alors améliorée dans un rapport de

$$\frac{1}{\sqrt{n}}$$

comme l'indique la théorie (voir l'article déjà cité de Lansiart et al).

De manière préférentielle, dans cette variante comme d'ailleurs aussi dans les autres variantes, pour qu'une partie du rayonnement de scintillation ne puisse pas être perdue entre deux modules intensificateurs et ne pas subir d'intensification, ce qui risquerait de faire apparaître dans l'image le caractère modulaire de l'intensificateur, sur la fenêtre 20, au droit des interstices entre modules existe une surface réfléchissante du côté du cristal scintillateur 19. Sous 8 est représentée une portion de cette surface entre les modules 21b et 21c. Tout rayon provenant d'une scintillation, dirigé vers cette surface réfléchissante est renvoyé en direction du cristal et rediffusé par la suite vers un module intensificateur, ce qui améliore le rendement de conversion du rayonnement γ ou X en lumière utile.

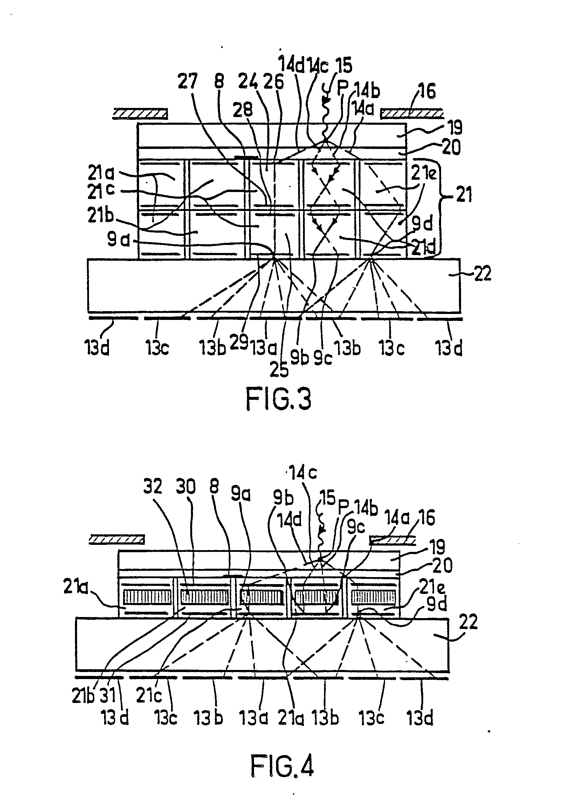

La figure 3 représente la coupe suivant le diamètre AB de la figure 1 de l'entrée d'une seconde variante de la caméra. On retrouve sur cette figure, avec les mêmes numéros, les mêmes éléments que sur la figure 2. L'intensificateur de lumière 21 comporte le long du diamètre AB les modules 21a, 21b, 21c, 21d, 21e. Chacun de ces modules comporte deux étages superposés sous la forme de deux tubes intensificateurs de lumière à inversion d'image (grandissement négatif) montés en cascade. Pour le module 21c, par exemple, ces tubes sont respectivement 24 et 25. Les photocathode et écran du tube 24 sont respectivement 26 et 27 et ceux du tube 25 respectivement 28 et 29. Dans ces tubes photocathode et écran ont des géométriques et surfaces sensiblement égales donc sont de grandissement voisin de -1. Du fait de la double inversion au sein de chaque module, le grandissement résultant de l'intensificateur est voisin de 1 et apparaît, sur l'ensemble des écrans de sorties, tel que 29, une vue directe de la scintillation au sortir du cristal scintillateur. Il va de soi que les deux étages de chaque module intensificateur peuvent avoir des grandissements différents de −1 et inverses l'un de l'autre et également que les deux étages peuvent être inclus dans un même tube. Par ailleurs, les sensibilités spectrales de photocathode et écran sont semblables pour les éléments couplés entre eux tels que 27 et 28 de telle sorte que les rendements de conversion soient maxima. Compte tenu du gain important de l'intensificateur de lumière, le localisateur peut être réalisé à l'aide de photodétecteurs présentant un gain relativement peu élevé. Ces photodétecteurs sont par exemple des photodiodes constituées de plaquettes semi-conductrices. Ces plaquettes déposées sur le guide de lumière 22 apparaissent en coupe selon le diamètre AB sous les numéros 13a, 13b, 13c, 13d. Sur cette figure 3, est indiquée comme sur la figure 2 la détection du point de scintillations P.

La figure 4 représente en coupe suivant le diametre AB une troisième variante de la caméra. Les éléments constitutifs portent les mêmes numéros que sur les figures 2 et 3. Les modules constitutifs de l'intensificateur sont du type à galette de microcanaux à émission secondaire électronique. Sur la figure 4, la galette relative au module 21b est représentée sous le numéro 32 tandis que la photocathode et l'écran sont représentés sous les numéros respectivement 30 et 31. Compte tenu également du gain important de ces modules, le localisateur peut être réalisé à l'aide de photodiodes constituées de plaquettes de matériau semiconducteur. Ces plaquettes en coupe selon la diamètre AB portent les numéros 13a, 13b, 13c, 13d. Sur cette figure est indiquée comme sur les figures 2 et 3, la détection du point de scintillation P.

**Revendications**

1. Caméra à scintillations pour détection de photons X ou gamma du genre comprenant, dans le sens de propagation du rayonnement, un cristal scintillateur (19) unique, de préférence une fenêtre de protection (20) dudit cristal transparente au rayonnement de scintillation, un intensificateur de lumière (21), un guide optique disperseur de lumière (22), un localisateur de scintillations formé d'un réseau (12) de photodétecteurs (13a—d) dont les faces d'entrée sont en regard du guide optique et des circuits reliés auxdits photodétecteurs de façon à produire des signaux électriques de coordonnées représentant les coordonnées spatiales des points d'interaction entre les rayons X ou gamma et ledit cristal scintillateur ainsi qu'un dispositif d'affichage servant à représenter lesdits signaux électriques sous la forme de points lumineux répartis dans un plan, le cristal scintillateur (19), la fenêtre de protection (20), l'intensificateur de lumière (21), et le guide optique (22) ayant chacun la forme d'une lame à faces parallèles et étant plaqués dans ledit ordre l'un contre l'autre, caractérisée en ce que ledit intensificateur de lumière (21) est constitué d'une mosaïque de modules identiques (21a—e) de grandissement voisin de 1, indépendants, juxtaposés et jointifs, s'étendant entre les faces parallèles dudit intensificateur et comportant chacun du côté scintillateur une photocathode (17, 26, 30) et du côté guide optique, un écran (18, 29, 31).

2. Caméra à scintillations selon la revendication 1, caractérisée en ce que chaque module (21a—e) dudit intensificateur (21) est un tube diode à focalisation de proximité et en ce que le localisateur est forme de préférence d'un réseau (12) de photomultiplicateurs à dynodes.

3. Caméra à scintillations selon la revendication 1, caractérisée en ce que chaque module (21a—e) dudit intensificateur (21) comporte deux étages (24, 25) superposés, chacun étant constitué d'un tube intensificateur d'image, l'écran (27) du premier étage (24) coïncidant avec la photocathode (28) du second (25) et en ce que le localisateur est constitué de préférence d'un réseau de photodiodes sous la forme chacune d'une plaquette de matériau semiconducteur.

4. Caméra à scintillations selon la revendication 3, caractérisée en ce que les grandissements desdits étages (24, 25) sont négatifs et inverses l'un de l'autre.

5. Caméra à scintillations selon la revendication 1, caractérisée en ce que chaque module (21a—e) dudit intensificateur (21) comporte une photocathode (30), une galette de microcanaux (32) à émission secondaire électronique et un écran (31) et en ce que le localisateur est constitué de préférence d'un réseau de photodiodes sous la forme chacune d'une plaquette de matériau semiconducteur.

6. Caméra à scintillations selon l'une des revendications 1 à 5, caractérisée en ce que les modules (21a—e) de l'intensificateur ont un contour extérieur polygonal.

7. Caméra à scintillations selon l'une des revendications 1 à 6, caractérisé en ce que, au droit de l'interstice entre parties actives des modules intensificateurs, la fenêtre de protection (20) est recouverte d'une surface réfléchissante (8) en direction du cristal scintillateur (19).

## Patentansprüche

1. Gammakamera zur Detektion von Röntgen- oder Gammaphotonen mit einem Szintillationskristall (19), vorzugsweise einem Schutzfenster (20) des Kristals, das für die Szintillationsstrahlung transparent ist, einem Lichtverstärker (21), einem Szintillationsortbestimmer in Form eines Netzes (12) von Fotodetektoren (31a...d), deren Eingangsflächen dem optischen Leiter zugewandt sind, und von derart mit den Fotodetektoren verbundenen Schaltkreisen, dass sie elektrische Koordinatensignale erzeugen, die die räumlichen Koordinaten der Wechselwirkungspunkte zwischen den Röntgen- oder Gammastrahlen und dem Szintillationskristall darstellen, sowie mit einer Anzeigeeinrichtung zum Darstellen der elektrischen Signale in Form von gleichmässig auf eine Ebene verteilten Leuchtpunkten, wobei die genannten Elemente in der Strahlungsfortpflanzungsrichtung angeordnet sind und weiter der Szintillationskristal (19), das Schutzfenster (20), des Lichtverstärker (21) und der optische Leiter (22) je die Form einer Platte mit parallel verlaufenden Flächen aufweisen und in der genannten Reihenfolge aneinander gelegt sind, dadurch gekennzeichnet, dass der Lichtverstärker (21) aus einem Mosaik gleicher Moduln (21a...e) mit einer Vergrösserung nahe bei 1 besteht, die unabhängig und lückenlos nebeneinander angeordnet sind, sich zwischen den parallel verlaufenden Flächen des Verstärkers erstrecken und je an der Szintillationsseite eine Fotorkathode (17, 26, 30) und an der optischen Leiterseite eine Schirm (18, 29, 31) enthalten.

2. Gammakamera nach Anspruch 1, dadurch gekennzeichnet, dass jeder Modul (21a...e) des Verstärkers (21) eine Diodenröhre mit Nahfokussierung ist und dass der Ortsbestimmer vorzugsweise aus einem Netz (12) von Dynodenfotovervielfachern besteht.

3. Gammakamera nach Anspruch 1, dadurch gekennzeichnet, dass jeder Modul (21a...e) des Verstärkers (21) zwei über einander angebrachte Stufen (24, 25) enthält, die je aus einer Bildverstärkerröhre bestehen, wobei der Schirm (27) der erste Stufe (24) mit der Fotokathode (28) der zweiten Stufe (25) zusammenfält, und dass der Ortsbestimmer vorzugweise aus einem Netz von Fotodioden jeweils in Form von Halbleiterplatten besteht.

4. Gammakamera nach Anspruch 3, dadurch gekennzeichnet, dass die Vergrösserung dieser Stufen (24, 25) negativ und zu einander invers sind.

5. Gammakamera nach Anspruch 1, dadurch gekennzeichnet, dass jeder Modul (21a...e) des Verstärkers (21) eine Fotokatode (30), eine Mikrokanalplatte (32) mit Sekundärelektronenemission und einen Schirm (31), enthält, und dass der Ortsbestimmer vorzugweise aus einem Netz von Fotodioden in Form von jeweils Halbleiterplatten besteht.

6. Gammakamera nach einem Ansprüche 1 bis 5, dadurch gekennzeichnet, dass die Moduln (21a...e) des Verstärkers einen vieleckigen Aussenumriss haben.

7. Gammakamera nach einem der Ansprüche 1 bis 6, dadurch gekennzeichnet, dass über dem Spalt zwischen aktiven Teilen der Verstärkermoduln das Schutzfenster (20) mit einer in Richtung auf den Szintillationskristall (19) reflektierenden Schicht (8) bedeckt ist.

## Claims

1. A scintillation camera for the detection of X or gamma photons, comprising, viewed in the propagation direction of the radiation, a single scintillation crystal (19), preferably a protection window (20) for said crystal which is transparent to the scintillation radiation, a light intensifier (21), an optical light dispersion guide (22), a scintillation localizer which is formed by an array (12) of photodetectors (13a—d) whose entrance faces face the optical guide and circuits which are connected to said photodetectors so as to form electrical coordinate signals which represent the spatial coordinates of the points of interaction between the X or gamma rays and said scintillation crystal, and also comprising a display device for displaying said electrical signals in the form of points of light which are distributed in a plane, the scintillation crystal (19), the protection window (20), the light intensifier (21) and the optical guide (22) which each have the form of a plate with parallel faces and which are arranged against one another in said sequence, characterized in that said light intensifier (21) is formed by a mosaic of identical independent, juxtaposed and adjoining modules (21a—e) with a magnification of approximately 1, said modules extending between the parallel faces of said intensifier and each module comprising a photocathode (17, 26, 30) on the side facing the scintillator and a screen (18, 29, 31) on the side facing the optical guide.

2. A scintillation camera as claimed in Claim 1, characterized in that each module (21a—e) of said intensifier (21) is formed by a diode tube with proximity focusing, the localizer preferably being formed by an array (12) of dynode photomultipliers.

3. A scintillation camera as claimed in Claim 1, characterized in that each module (21a—e) of said intensifier (21) comprises two superposed stages (24, 25), each stage being formed by an image intensifier tube, the screen (27) of the first stage (24) being coincident with the photocathode (28) of the second stage (25), the localizer preferably being formed by an array of photodiodes, each of which is formed by a plate of semiconductor material.

4. A scintillation camera as claimed in Claim 3, characterized in that the magnifications of said stages (24, 25) are negative and the inverse of one another.

5. A scintillation camera as claimed in Claim 1, characterized in that each module (21a—e) of said intensifier (21) comprises a photocathode (30), a microchannel (32) with secondary electron emission, and a screen (31), the localizer preferably being formed by an array of photodiodes, each of which is formed by a plate of semiconductor material.

6. A scintillation camera as claimed in any one of Claims 1 to 5, characterized in that the modules (21a—e) of the intensifier have a polygonal outer boundary.

7. A scintillation camera as claimed in any one of the Claims 1 to 6, characterized in that directly in front of the space between active parts of the intensifier modules the protection window (20) is covered by a reflective surface (8) in the direction facing the scintillation crystal (19).

FIG.1

FIG.2

FIG.3

FIG.4